# EUROPÄISCHE PATENTANMELDUNG

(11) **EP 1 594 212 A2**
(43) Veröffentlichungstag der Anmeldung: **09.11.2005**
(21) Anmeldenummer: 05003960.1
(22) Anmeldetag: 24.02.2005
(51) Int. Cl.: H02K 7/116, H02K 7/11

(54) **Getriebe mit Fail-Safe-Einrichtung**

(30) Priorität: 06.05.2004 DE 102004022407
(71) Anmelder: Bühler Motor GmbH, 90459 Nürnberg (DE)
(72) Erfinder: Strüber, Jürgen, 90451 Nürnberg (DE); Köchling, Martin, Dr., 90461 Nürnberg (DE); Spitzner, Rüdiger, 92348 Berg (DE); Frühwald, Bernd, 91459 Erlbach (DE)

(57) **Zusammenfassung**

Die Erfindung betrifft einen Getriebemotor (1) mit Fail-Safe-Einrichtung (2), bestehend aus einem Gehäuse (4), einem Elektromotor (3), einem Untersetzungsgetriebe (5) mit zumindest einem Umlaufgetriebe (6) einer Elektromagnetkupplung (11) und einer Ausgangswelle (13), wobei das Umlaufgetriebe (6) ein mit zumindest einem Umlaufrad (8) getrieblich in Eingriff befindliches im Betrieb relativ zu dem Gehäuse (4) feststehendes Hohlrad aufweist, und die Elektromagnetkupplung (11), einen magnetisch leitenden Magnetanker und ein magnetisch leitender Magnetstator (21) umfasst, in welchem eine Elektromagnetspule (15) angeordnet ist, bei deren Bestromung das Hohlrad (10) gegen Verdrehen gesichert ist. Aufgabe der Erfindung ist es bei einem derartigen Getriebemotor für einen zuverlässigen Betrieb der Fail-Safe-Einrichtung bei geringem Bauraum und geringer Teileanzahl zu sorgen, wobei eine einfache Montage möglich ist. Diese Aufgabe wird erfindungsgemäß dadurch gelöst, dass das Hohlrad (10), als Magnetanker dient, axial verschiebbar ist und seine geometrische Ausrichtung zumindest während eines Ein- oder Ausschaltvorgangs der Elektromagnetkupplung (11) nicht durch das Gehäuse (4) bestimmt ist.

## Beschreibung

Die Erfindung betrifft einen Getriebemotor (1) mit Fail-Safe-Einrichtung (2), bestehend aus einem Gehäuse (4), einem Elektromotor (3), einem Untersetzungsgetriebe (5) mit zumindest einem Umlaufgetriebe (6) einer Elektromagnetkupplung (11) und einer Ausgangswelle (13), wobei das Umlaufgetriebe (6) ein mit zumindest einem Umlaufrad (8) getrieblich in Eingriff befindliches im Betrieb relativ zu dem Gehäuse (4) feststehendes Hohlrad aufweist, und die Elektromagnetkupplung (11), einen magnetisch leitenden Magnetanker und ein en magnetisch leitenden Magnetstator (21) umfasst, in welchem eine Elektromagnetspule (15) angeordnet ist, bei deren Bestromung das Hohlrad (10) gegen Verdrehen gesichert ist. Statt der im Folgenden durchgängig verwendeten Bezeichnung "Elektromagnetkupplung" wäre auch der Begriff "Elektromagnetbremse" zutreffend.

Aus der DE 101 17 934 A1 ist ein gattungsgemäßer Getriebemotor, bestehend aus einem Elektromotor und einem Untersetzungsgetriebe bekannt, bei dem ein Hohlrad im Betrieb durch eine elektromagnetisch aktivierbare Bremseinrichtung ein- oder auskuppelbar ist, um ein mit einer Ausgangswelle verbundenes Stellglied, in diesem Fall einer Heckklappe eines Fahrzeugs, manuell betätigen zu können. Der Elektromagnet ist bei dem bekannten Getriebemotor radial außerhalb eines das Untersetzungsgetriebe umschließenden Gehäuses angeordnet und über ein Hebelgestänge mit dem Hohlrad kuppelbar, wodurch ein erheblicher Bauraum erforderlich und eine große Anzahl an Teilen benötigt wird, deren Montage teilweise schwierig ist. Das Hohlrad der DE 101 17 934 A1 weist eine große axiale Länge auf und ist über Kugellager aufwändig gelagert, um einen zuverlässigen Betrieb zu gewährleisten.

Aufgabe der Erfindung ist es daher bei einem Getriebemotor der eingangs beschriebenen Gattung für einen zuverlässigen Betrieb der Fail-Safe-Einrichtung bei geringem Bauraum und geringer Teileanzahl zu sorgen, wobei eine einfache Montage möglich ist.

Diese Aufgabe wird erfindungsgemäß dadurch gelöst, dass das Hohlrad (10), als Magnetanker dient, axial verschiebbar ist und seine geometrische Ausrichtung zumindest während eines Ein- oder Ausschaltvorgangs der Elektromagnetkupplung (11) nicht durch das Gehäuse (4) bestimmt ist. Da das Hohlrad selbst als Magnetanker dient ist hierfür kein zusätzliches Teil erforderlich, das fehlerhaft sein könnte und zusätzlich montiert werden müsste. Die axiale Verschiebbarkeit des Hohlrades erlaubt eine Entkopplung von Hohlrad und Ausgangswelle. Weil die geometrische Ausrichtung des Hohlrads nicht vom Gehäuse bestimmt wird, ist ein zuverlässiger Ein- und Auskupplungsvorgang gewährleistet und ein Verklemmen wird sicher verhindert. Durch die geringe Teileanzahl wird entsprechend auch Bauraum eingespart.

Eine zweite Lösung der Aufgabe besteht darin, dass das Hohlrad (10), als Magnetanker dient, axial verschiebbar ist und seine radiale Außenfläche keine Führungsflächen sind. Dadurch kann das Hohlrad ohne Verklemmungsgefahr sehr kurzbauend ausgeführt werden.

Weiterbildungen der Erfindung werden in den Unteransprüchen dargestellt. Der Bauraum ist soweit verringerbar, dass das Verhältnis von axialer Länge des Hohlrads (10) zu seinem Durchmesser kleiner als 0,5 ist.

Zweckmäßigerweise ist das Hohlrad (10) im unbestromten Zustand der Elektromagnetspule (15) vom Gehäuse (4) und dadurch der Elektromotor (3) von der Ausgangswelle (13) entkoppelt, wodurch von einer an der Ausgangswelle (13) und/oder dem Stellglied angreifende Rückstellfeder (12) eine Verstellung des Stellglieds bewirkbar ist. Durch diese Anordnung kann eine definierte Ruhestellung durch das Stellglied eingenommen oder eine Handbetätigung bei Ausfall des Elektromotors durchgeführt werden.

Um ein kompaktes Antriebsmodul zu schaffen, das einfach an das Stellglied ankoppelbar ist, ist es von Vorteil, die Rückstellfeder (12) einerseits am Gehäuse (4) und andererseits an der Ausgangswelle (13) angreifen zu lassen.

Die Zuverlässigkeit des Ein- und Auskuppelvorgangs kann gesichert werden, wenn in radialer Richtung zwischen dem Hohlrad (10) und dem Gehäuse (4) ein Spielraum (14) freigespart ist.

Weiter ist hierzu vorgesehen, dass die Ausrichtung des Hohlrades (10) bei Betrieb des Elektromotors und/oder bei bestromter Elektromagnetspule (15) ausschließlich durch die Planetenräder (8) und die Elektromagnetkupplung (11) bestimmt ist

Es ist vorgesehen die Funktion der Elektromagnetspule (15) und des Elektromotors (3) miteinander so zu verknüpfen, dass die Elektromagnetspule (15) während des Betriebs des Elektromotors (3) bestromt ist. Dies hat automatisch zur Folge, dass im Betrieb des Elektromotors stets eine Drehmomentübertragung auf das Stellglied sichergestellt ist und bei nicht betätigtem Elektromotor, also gegebenenfalls auch bei Motorausfall sicher kein Zurückdrehen des Elektromotors notwendig ist. Bei Verwendung eines selbsthemmenden Getriebes wäre dann auch sicher eine federbeaufschlagte oder handbetätigte Rückstellung des Stellglieds möglich.

Ein besonders einfacher Aufbau ergibt sich, wenn das Hohlrad (10) ein einstückiges reib- oder formschlüssiges Kupplungsmittel ist.

Um größere Kräfte übertragen zu können ist vorgesehen, dass der Magnetstator (11) und das Hohlrad (10) zusammen eine formschlüssige Kupplung (16) bilden.

Die formschlüssige Kupplung wird weiter verbessert, indem zur Bildung eines Formschlusses eine Vielzahl von ineinander greifenden Nocken (17) und Nuten (18) vorgesehen sind, die so geformt sind, dass in einer Drehrichtung ein Ausrasten möglich und in der Gegen-Drehrichtung ein Ausrasten unmöglich ist. Die Vielzahl der Nocken und Nuten ermöglicht ein schnelles Synchronisieren beim Einkuppeln. Wenn die Elektromagnetkupplung auch als Überlastkupplung verwendet werden soll, ist es sinnvoll die Neigungswinkel von Nocken und Nuten so aufeinander abzustimmen, dass ein Überrasten motorisch möglich ist. Bei Verwendung einer Rückstellfeder ist die Überrastfunktion nur in einer Drehrichtung nötig, so dass in der Gegenrichtung steilere Flankenwinkel gewählt werden können. Dies hat den Vorteil, dass beim Einkuppeln ein Überratschen mit entsprechender Geräuschentwicklung sicherer vermeidbar ist, insbesondere, wenn eine Flanke (22) der Nocken (17) und der Nuten (18) zumindest annähernd rechtwinklig zur Drehebene orientiert ist.

Das Hohlrad soll im Betrieb zentriert sein, dies wird durch die ineinander greifenden Nocken und Nuten bereits ab drei Nuten/Nocken erreicht. Für die Zentrierung ist sowohl dann gesorgt, wenn zwischen Nocken und Nuten ein geringes Drehspiel verbleibt als auch wenn diese spielfrei ineinander greifen. Mit Drehspiel erfolgt die Zentrierung nach motorischer Betätigung durch die miteinander zusammenwirkenden Flanken.

Die Erfindung eignet sich insbesondere bei Untersetzungsgetrieben, die z.B. aus einem selbsthemmenden Schneckengetriebe (19) und dem Planetengetriebe (6) bestehen, wobei das Schneckengetriebe (19) zwischen Elektromotor (3) und Planetengetriebe (6) angeordnet ist.

Es ist zweckmäßig die Ausgangswelle (13) mit dem Planetenträger (9) einstückig oder mit dem Planetenträger (9) drehfest verbunden auszubilden und durch eine zentrale Ausnehmung (20) des Hohlrads hindurchtreten zu lassen.

Analog zur radialen Außenfläche des Hohlrads (10) hat auch die zentrale Ausnehmung (20) keine lagernde oder führende Funktion, die eine Verklemmungsgefahr bedeuten würde, hierzu ist zwischen der Ausgangswelle (13) und einer die Ausnehmung (20) begrenzende Innenfläche des Magnetstators (21) ein ringförmiger Spielraum vorgesehen.

Der erfindungsgemäße Getriebemotor wird bevorzugt als Stellantrieb für ein Verteilergetriebe eingesetzt. Bei dieser Kfz-Anwendung soll die Verteilung des Antriebsmomentes zwischen Vorder- und Hinterachse zur Steigerung des Fahrkomforts dynamisch geregelt werden. Das bedeutet, dass bei eingeschaltetem Kfz-Antriebsmotor auch die Elektromagnetspule und der Elektromotor ständig betrieben werden. Sobald das Fahrzeug abgestellt wird, soll das Verteilergetriebe in eine definierte Ruhestellung verstellt werden, dies kann erfindungsgemäß durch die Rückstellfeder automatisch erfolgen, wenn die Elektromagnetkupplung im stromlosen Zustand geöffnet ist.

Ein Ausführungsbeispiel der Erfindung wird nachfolgend anhand der Zeichnung näher erläutert. Es zeigen:
Fig. 1 eine Schnittansicht durch einen Getriebemotor,
Fig. 2a eine erste Ausführungsform einer formschlüssigen Kupplung im Schnitt,
Fig. 2b eine zweite Ausführungsform der formschlüssigen Kupplung im Schnitt,
Fig. 2c eine dritte Ausführungsform der formschlüssigen Kupplung im Schnitt und
Fig. 3 eine vereinfachte Gesamtansicht des Getriebemotors.

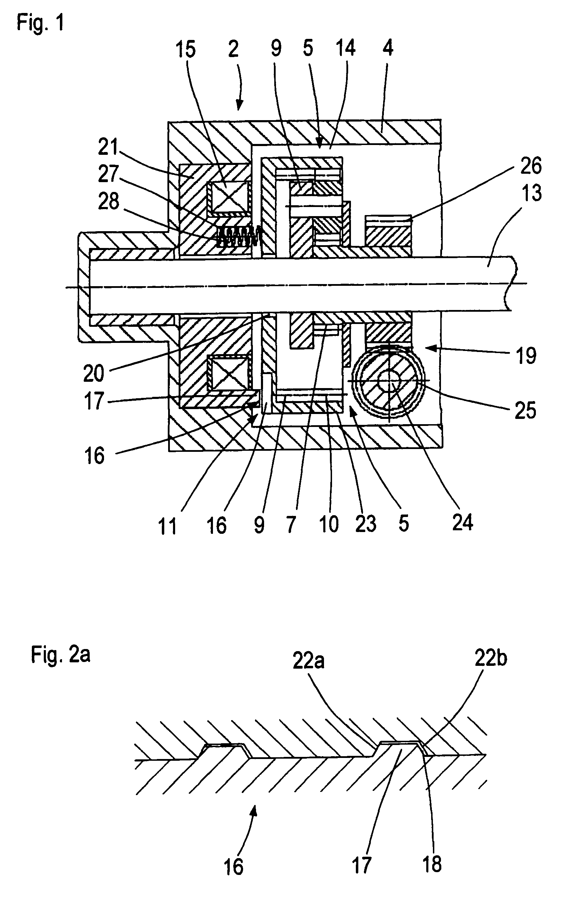

Fig. 1 zeigt eine Schnittansicht durch einen Getriebemotor 1 mit einer Fail-Safe-Einrichtung 2 gemäß vorliegender Erfindung, mit einem Elektromotor 3, einem Untersetzungsgetriebe 5, bestehend aus einem Schneckengetriebe 19 und einem Umlaufgetriebe 6, einem Gehäuse 4, einer Elektromagnetkupplung 11, und einer Ausgangswelle 13, wobei das Schneckengetriebe 19 eine mit einer Motorwelle 24 fest verbundene Schnecke 25 und einem von der Schnecke angetriebenen Schneckenrad 26 besteht, das Umlaufgetriebe 6 eine mit dem Schneckenrad 26 drehfestes Sonnenrad 7, einen mit der Ausgangswelle 13 drehfesten Träger 9, auf dem drei Umlaufräder 8 gelagert sind und ein Hohlrad 10 umfasst, und zur Elektromagnetkupplung 11 ein gehäusefester Magnetstator 21, eine darin aufgenommene Elektromagnetspule 15 und ein durch das Hohlrad 10 gebildeten Magnetanker gehören. Im vorliegenden Beispiel sind am Magnetstator 21 axial drei Nocken 17 und am Hohlrad 10 axial drei Nuten 18 angeordnet, die bei bestromter Elektromagnetspule 15 und ggf. nach einer Synchronisationsphase als formschlüssige Kupplung 16 ineinander greifen. Zwischen einer radialen Außenfläche 23 des Hohlrads 10 und dem Gehäuse 4 ist ein Spielraum 14 freigespart, um ein Verklemmen des als Magnetanker dienenden Hohlrads zu vermeiden. Aus dem gleichen Grund ist auch zwischen der Ausgangswelle 13 und der Innenfläche einer in der Hohlwelle 10 vorgesehenen zentralen Ausnehmung 20 ein ringförmiger Spielraum vorgesehen. Um das Ausrücken der Elektromagnetkupplung 11 bei Remanenzmagnetismus zu erleichtern sind beispielhaft drei Druckfedern 27 vorgesehen, die in Ausnehmungen 28 des Magnetstators 21 aufgenommen sind und bei bestromter Elektromagnetspule 15 Energie speichern.

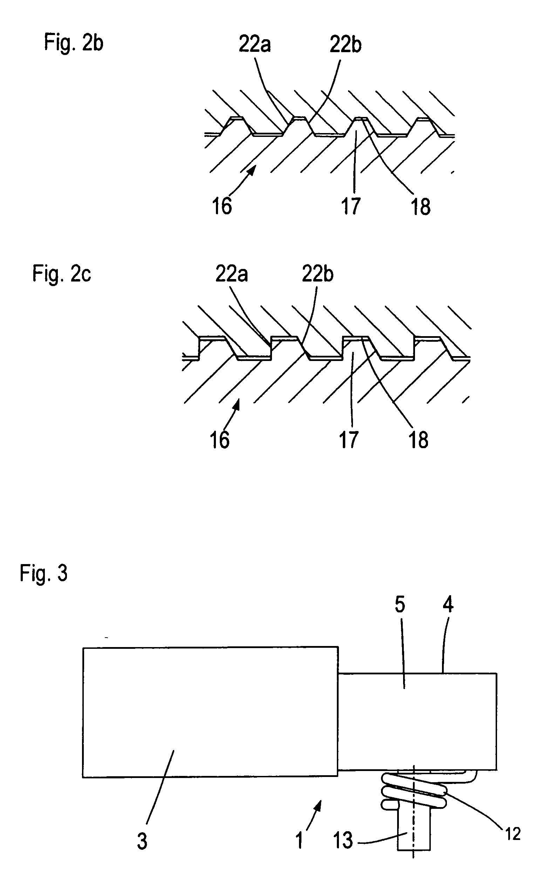

Die Fig. 2a bis 2c zeigen drei Ausführungsformen der formschlüssigen Kupplung 16 im Schnitt - zur Vereinfachung jeweils abgewickelt dargestellt. Bei Fig.2a und 2b sind zwei ineinander greifende Nocken 17 und Nuten 18 dargestellt, deren Flanken 22 symmetrisch geneigt sind. In Fig. 2a sind die Nocken 17 und Nuten 18 so dimensioniert, dass noch ein geringes Drehspiel vorhanden ist, während die formschlüssige Kupplung 16 in Fig. 2b spielfrei ausgebildet ist. Die beiden Flanken 22a, 22b der Ausführungsform nach Fig. 2c sind unsymmetrisch ausgebildet, so dass nur in einer Drehrichtung ein Überrasten möglich ist; auch hier ist die formschlüssige Kupplung 16 spielfrei.

Fig. 3 zeigt eine vereinfachte Gesamtansicht des Getriebemotors 1, mit dem Elektromotor 3, dem Gehäuse 4 der Ausgangswelle 13 und einer Rückstellfeder 12, die einerseits an der Ausgangswelle 13 und andererseits an dem Gehäuse 4 angreift und die Ausgangswelle 13 und mit ihr ein nicht dargestelltes Stellglied bei geöffneter Elektromagnetkupplung zurückstellt.

### Bezugszeichenliste

- 1: Getriebemotor
- 2: Fail-Safe-Einrichtung
- 3: Elektromotor
- 4: Gehäuse
- 5: Untersetzungsgetriebe
- 6: Umlaufgetriebe
- 7: Sonnenrad
- 8: Umlaufrad
- 9: Träger
- 10: Hohlrad
- 11: Elektromagnetkupplung
- 12: Rückstellfeder
- 13: Ausgangswelle
- 14: Spielraum
- 15: Elektromagnetspule
- 16: formschlüssige Kupplung
- 17: Nocke
- 18: Nut
- 19: Schneckengetriebe
- 20: zentrale Ausnehmung
- 21: Magnetstator
- 22a, 22b: Flanke
- 23: radiale Außenfläche (des Hohlrads)
- 24: Motorwelle
- 25: Schnecke
- 26: Schneckenrad
- 27: Druckfeder
- 28: Ausnehmungen

## Patentansprüche

1. Getriebemotor (1) mit Fail-Safe-Einrichtung (2), bestehend aus einem Gehäuse (4), einem Elektromotor (3), einem Untersetzungsgetriebe (5) mit zumindest einem Umlaufgetriebe (6) einer Elektromagnetkupplung (11) und einer Ausgangswelle (13), wobei das Umlaufgetriebe (6) ein mit zumindest einem Umlaufrad (8) getrieblich in Eingriff befindliches im Betrieb relativ zu dem Gehäuse (4) feststehendes Hohlrad aufweist, und die Elektromagnetkupplung (11), einen magnetisch leitenden Magnetanker und einen magnetisch leitenden Magnetstator (21) umfasst, in welchem eine Elektromagnetspule (15) angeordnet ist, bei deren Bestromung das Hohlrad (10) gegen Verdrehen gesichert ist, **dadurch gekennzeichnet, dass** das Hohlrad (10), als Magnetanker dient, axial verschiebbar ist und seine geometrische Ausrichtung zumindest während eines Ein- oder Ausschaltvorgangs der Elektromagnetkupplung (11) nicht durch das Gehäuse (4) bestimmt ist.

2. Getriebemotor (1) mit Fail-Safe-Einrichtung (2), bestehend aus einem Gehäuse (4), einem Elektromotor (3), einem Untersetzungsgetriebe (5) mit zumindest einem Umlaufgetriebe (6) einer Elektromagnetkupplung (11) und einer Ausgangswelle (13), wobei das Umlaufgetriebe (6) ein mit zumindest einem Umlaufrad (8) getrieblich in Eingriff befindliches im Betrieb relativ zu dem Gehäuse (4) feststehendes Hohlrad aufweist, und die Elektromagnetkupplung (11), einen magnetisch leitenden Magnetanker und einen magnetisch leitenden Magnetstator (21) umfasst, in welchem eine Elektromagnetspule (15) angeordnet ist, bei deren Bestromung das Hohlrad (10) gegen Verdrehen gesichert ist, **dadurch gekennzeichnet, dass** das Hohlrad (10), als Magnetanker dient, axial verschiebbar ist und seine radiale Außenfläche keine Führungsflächen sind.

3. Getriebemotor nach Anspruch 1 oder 2, **dadurch gekennzeichnet, dass** das Verhältnis von axialer Länge des Hohlrads (10) zu seinem Durchmesser kleiner als 0,5 ist.

4. Getriebemotor nach Anspruch 1, 2 oder 3, **dadurch gekennzeichnet, dass** das Hohlrad (10) im unbestromten Zustand der Elektromagnetspule (15) vom Gehäuse (4) und **dadurch** der Elektromotor (3) von der Ausgangswelle (13) entkoppelt ist, wodurch von einer an der Ausgangswelle (13) und/oder dem Stellglied angreifende Rückstellfeder (12) eine Verstellung des Stellglieds bewirkbar ist.

5. Getriebemotor nach Anspruch 4, **dadurch gekennzeichnet, dass** die Rückstellfeder (12) einerseits am Gehäuse (4) und andererseits an der Ausgangswelle (13) angreift.

6. Getriebemotor nach zumindest einem der vorangehenden Ansprüche, **dadurch gekennzeichnet, dass** in radialer Richtung zwischen dem Hohlrad (10) und dem Gehäuse (4) ein Spielraum (14) freigespart ist.

7. Getriebemotor nach zumindest einem der vorangehenden Ansprüche, **dadurch gekennzeichnet, dass** die Ausrichtung des Hohlrades (10) bei Betrieb des Elektromotors und/oder bei bestromter Elektromagnetspule (15) ausschließlich durch die Planetenräder (8) und die Elektromagnetkupplung (11) bestimmt ist.

8. Getriebemotor nach zumindest einem der vorangehenden Ansprüche, **dadurch gekennzeichnet, dass** die Elektromagnetspule (15) während des Betriebs des Elektromotors (3) bestromt ist.

9. Getriebemotor nach zumindest einem der vorangehenden Ansprüche, **dadurch gekennzeichnet, dass** das Hohlrad (10) ein einstückiges reib- oder formschlüssiges Kupplungsmittel ist.

10. Getriebemotor nach Anspruch 9, **dadurch gekennzeichnet, dass** der Magnetstator (11) und das Hohlrad (10) zusammen eine formschlüssige Kupplung (16) bilden.

11. Getriebemotor nach Anspruch 10, **dadurch gekennzeichnet, dass** zur Bildung eines Formschlusses eine Vielzahl von ineinander greifenden Nocken (17) und Nuten (18) vorgesehen sind, die so geformt sind, dass in einer Drehrichtung ein Ausrasten möglich und in der Gegen-Drehrichtung ein Ausrasten unmöglich ist.

12. Getriebemotor nach Anspruch 10, **dadurch gekennzeichnet, dass** zur Bildung eines Formschlusses zumindest drei Nocken (17) und Nuten (18) vorgesehen sind.

13. Getriebemotor nach Anspruch 11 oder 12, **dadurch gekennzeichnet, dass** zwischen Nocken (17) und Nuten (18) im bestromten Zustand der Elektromagnetspule ein geringes Drehspiel oder kein Drehspiel vorhanden ist.

14. Getriebemotor nach Anspruch 11, 12 oder 13, **dadurch gekennzeichnet, dass** eine Flanke (22) der Nocken (17) und der Nuten (18) zumindest annähernd rechtwinklig zur Drehebene orientiert ist.

15. Getriebemotor nach zumindest einem der vorangehenden Ansprüche, **dadurch gekennzeichnet, dass** das Untersetzungsgetriebe (5) aus einem selbsthemmenden Schneckengetriebe (19) und dem Planetengetriebe (6) besteht, wobei das Schneckengetriebe (19) zwischen Elektromotor (3) und Planetengetriebe (6) angeordnet ist.

16. Getriebemotor nach zumindest einem der vorangehenden Ansprüche, **dadurch gekennzeichnet, dass** dessen Ausgangswelle (13) mit dem Planetenträger (9) einstückig oder mit dem Planetenträger (9) drehfest verbunden ist und durch eine zentrale Ausnehmung (20) des Hohlrads hindurchtritt.

17. Getriebemotor nach Anspruch 16, **dadurch gekennzeichnet, dass** die zentrale Ausnehmung (20) keine lagernde oder führende Funktion hat.

18. Getriebemotor nach Anspruch 17, **dadurch gekennzeichnet, dass** zwischen der Ausgangswelle (13) und der Ausnehmung (20) ein ringförmiger Spielraum (27) vorgesehen ist.

19. Stellantrieb mit einem Getriebemotor nach zumindest einem der vorangehenden Ansprüche für die Betätigung eines Verteilergetriebes.
